(19) Europäisches Patentamt
European Patent Office
Office européen des brevets

(11) Veröffentlichungsnummer: **0 088 256**
**B2**

(12) # NEUE EUROPÄISCHE PATENTSCHRIFT

(45) Veröffentlichungstag der neuen Patentschrift: **12.10.88**

(21) Anmeldenummer: **83101459.2**

(22) Anmeldetag: **16.02.83**

(51) Int. Cl.⁴: **A 01 N 43/653,** A 01 N 59/20, A 01 N 47/32, A 01 N 43/90, A 01 N 43/78, A 01 N 43/707 // (A01N59/20, 43:653), (A01N43/653, 43:50), (A01N47/32, 43:653), (A01N43/90, 43:653), (A01N43/78, 43:653), (A01N43/707, 43:653)

(54) **Fungizide Mittel.**

(30) Priorität: **06.03.82 DE 3208142**

(43) Veröffentlichungstag der Anmeldung:
**14.09.83 Patentblatt 83/37**

(45) Bekanntmachung des Hinweises auf die Patenterteilung:
**23.07.86 Patentblatt 86/30**

(45) Bekanntmachung des Hinweises auf die Entscheidung über den Einspruch:
**12.10.88 Patentblatt 88/41**

(84) Benannte Vertragsstaaten:
**AT BE CH DE FR GB IT LI NL SE**

(56) Entgegenhaltungen:
**DE-A-2 552 967**
**DE-A-2 633 874**
**DE-A-2 812 287**
**DE-A-2 838 847**
**DE-A-3 010 560**
**FR-A-2 432 274**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Brandes, Wilhelm, Dr., Eichendorffstrasse 3, D-5653 Leichlingen (DE)**
Erfinder: **Kaspers, Helmut, Dr., Steglitzer Strasse 4, D-5090 Leverkusen (DE)**
Erfinder: **Reinecke, Paul, Dr., Lessingstrasse 11, D-5090 Leverkusen 3 (DE)**
Erfinder: **Scheinpflug, Hans, Dr., Am Thelenhof 15, D-5090 Leverkusen (DE)**
Erfinder: **Krämer, Wolfgang, Dr., Am Eckbusch 39/45, D-5600 Wuppertal 1 (DE)**

**EP 0 088 256 B2**

**Beschreibung**

Die vorliegende Erfindung betrifft neue fungizide Wirkstoffkombinationen aus bekannten 1,2,4-Triazol-Derivaten von Phenoxyetherketonen und Phenoxyetheralkanolen und anderen bekannten fungiziden Wirkstoffen.

Es ist bereits bekannt geworden, daß 1,2,4-Triazol-Derivate von Phenoxyetherketonen und Phenoxyetheralkanolen, wie z. B. das 1-(4-Chlorphenoxy)-3,3-dimethyl-1-(1,2,4-triazol-1-yl)-2-butanon und das entsprechende 2-Butanol-Derivat eine gute Wirkung gegen pflanzenschädigende Pilze aufweisen (vgl. hierzu die Deutschen Patentschriften 2 201 064 und 2 324 010), wobei insbesondere die Wirkung gegen echte Mehltaupilze erwähnt werden soll, ferner gegen Rosterkrankungen, Blattfleckenerkrankungen und Branderkrankungen bei verschiedenen Kulturpflanzen. Weiterhin sind in der Patentliteratur Mischungen aus 1-(4-Chlorphenoxy)-3,3-dimethyl-1-(1,2,4-triazol-1-yl)-2-butanon und 1-(4-Chlorphenyl)- bzw. 1-(2,4-Dichlorphenyl)-2-(1,2,4-triazol-1-yl)-4,4-dimethyl-1-penten-3-ol neben zahlreichen anderen Kombinationsmöglichkeiten erwähnt (vgl. DE-OS 2 838 847 und DE-OS 3 010 560); über eine praktische Bedeutung dieser Mischungen ist jedoch bisher nichts bekannt geworden.

Ebenfalls bekannt geworden sind die folgenden fungiziden Wirkstoffe bzw. Wirkstoffgruppen:

(A) Chinoxalin-Derivate, wie z. B. 6-Methyl-chinoxalin-2,3-cycl.-dithiolcarbonat (CHINOMETHIONAT) und Chinoxalin-2,3-cycl.-trithiocarbonat (CHINOTHIONAT) (vgl. hierzu die Angaben in R. Wegler, "Chemie der Pflanzenschutz- und Schädlingsbekämpfungsmittel", Band 2, Seiten 128 und 129, Springer-Verlag, 20 Berlin/Heidelberg/New York, 1970);

(B) Derivate von Imidazolen und Triazolen, wie z. B. der Allyl-[1-(2,4-dichlorphenyl)-2-imidazolyl-(1)-ethyl]-ether (FUNGAFLOR), das 2-(Imidazol-1-yl-methyl)-2-phenyl-hexannitril (FENAPRONIL), das 1-Cyclohexyl-2-(1,2,4-triazol-1-yl)-3-hydroxy-4,4-dimethyl-penten-(1), das 1-[2-(2,4-Dichlorphenyl)-4-propyl-1,3-dioxolan-2-yl-methyl]-1H-1,2,4-triazol (PROPICONAZOL), des 1-[2-(2,4-Dichlorphenyl)-4-ethyl-1,3-dioxolan-2-yl]-methyl-1H-1,2,4-triazol (ETACONAZOLE), das 1-(2,4-Dichlorphenyl)-2-(1 ,2,4-triazol-1-yl)-4,4-dimethylpentan-3-ol (DICLOBUTRAZOL), das 1-(4-Chlorphenyl)-2-(1,2,4-triazol-1-yl)-4,4-dimethyl-pentan-3-ol, das 1-(2,4-Dichlorphenyl)-2-(1,2,4-triazol-1-yl)-3-hydroxy-4,4-dimethyl-penten-(1), das 1-(4-Chlorphenyl)-2-(1-2,4-triazol-1-yl)-3-hydroxy-4,4-dimethyl-penten-(1) und das 4-(n-Butyl)-4H-1,2,4-triazol (TRIAZBUTIL) (vgl. hierzu DE-OS 2 429 523, DE-OS 2 063 857, DE-OS 2 604 047, DE-OS 2 906 061, DE-OS 2 551 560, DE-OS 2 737 489, DE-OS 3 010 560 und US-PS 3 647 810).

(C) Derivate von Phenylharnstoffen, wie z. B. der 1-Phenyl-3-cyclopentyl-3-(4-chlorbenzyl)-harnstoff (PENCYCURON), vgl. DE-PS 2 732 257;

(D) Bis-trifluormethylimino-fünfring-Verbindungen, wie z. B. das 2-Phenylimino-3-phenyl-4,5-bis-(trifluormethylimino)-thiazolidin (FLUBENZIMINE), und die Verbindung der Formel

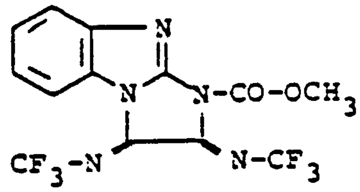

(vgl. dazu DE-OS 2 062 348 und 2 062 346);

(E) Derivate von 3-Azolyl-benzo-1 ,2,4-triazinen und -benzo-1,2,4-triazin-1 -oxiden, wie z. B. das 3-Imidazolyl-7-chlor-benzo-1,2,4-triazin-1-oxid (vgl. DE-OS 2 802 488);

(F) Kupfersalze von organischen Verbindungen, wie z. B. das Kupfersalz des 8-Hydroxychinolins (vgl. R. Wegler, loc. cit., Seite 112);

Die Wirksamkeit der vorbekannten Einzelwirkstoffe ist auf einzelnen Anwendungsgebieten nicht immer voll befriedigend.

Es wurde nun gefunden, daß neue Wirkstoffkombinationen aus 1,2,4-Triazol-Derivaten von Phenoxyetherketonen und Phenoxyetheralkanolen der Formel

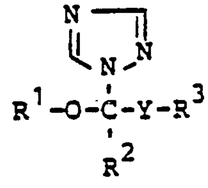

(I)

in welcher

$R^1$ für Phenyl steht, das gegebenenfalls durch Halogen, Nitro, Trifluormethyl, Alkyl mit bis zu 6

Kohlenstoffatomen, Alkoxy mit bis zu 4 Kohlenstoffatomen, Phenyl und 4-Chlorphenyl substituiert sein kann,
$R^2$ für Wasserstoff, Alkyl mit bis zu 4 Kohlenstoffatomen oder Phenyl steht,
$R^3$ für Alkyl mit bis zu 6 Kohlenstoffatomen, Cycloalkyl mit 5 bis 6 Kohlenstoffatomen, Phenyl oder 4-Chlorphenyl steht und
Y für die CO-Gruppe, die Gruppe

C
||
N - OH

oder $C(OH)_2$, oder CH(OH) steht, und
(A) Chinoxalin-Derivaten der Formel

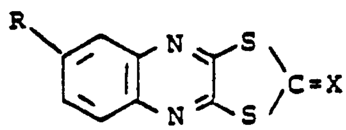

(IIa): R = $CH_3$, X = O
(IIb): R = H, X = S

und/oder
(B) Derivaten von Imidazolen und Triazolen der Formeln

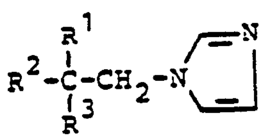

(IIIa): $R^1$ = H, $R^2$ = $CH_2$=CH-$CH_2$-O
$R^3$ = 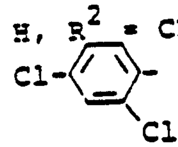

(IIIb): $R^1$ = CN, $R^2$ = 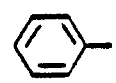
$R^3$ = $C_4H_9$

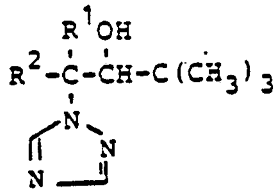

(IIIc): $R^1$ und $R^2$ zusammengenommen
= 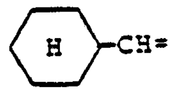

(III d): $R^1$ = H, $R^2$ = 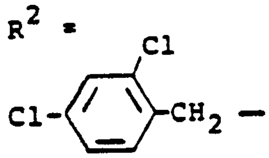

(III e): $R^1$ = H, $R^2$ = 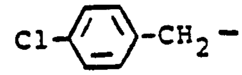

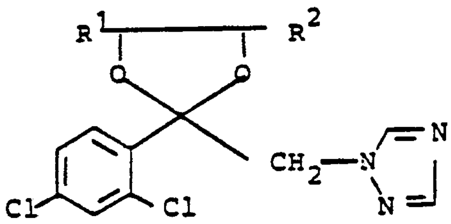

(IIIf): $R^1 = C_3H_7$, $R^2 = H$
($HNO_3$-Salz)

(IIIg): $R^1 = H$, $R^2 = C_2H_5$

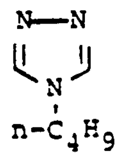

(IIIh)

und/oder
(C) einem Phenylharnstoff der Formel

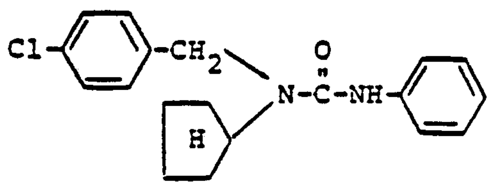

(IV)

und/oder
(D) Bis-trifluormethylimino-fünfring-Verbindungen der Formel

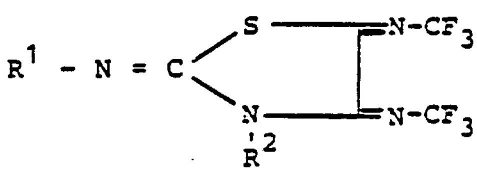

(Va): $R^1 = R^2 =$ 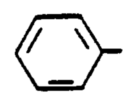 und

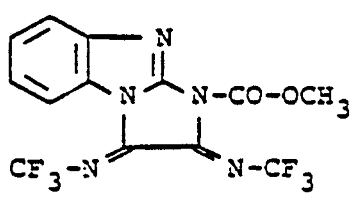

(Vb)

und/oder
(E) einem 2-Azolyl-benzo-1,2,4-triazin-Derivat der Formel

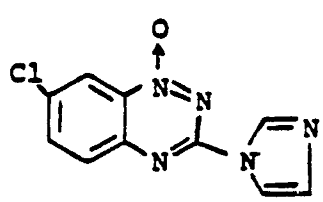

(VI)

und/oder
(F) einem Kupfer-Komplexsalz der Formel

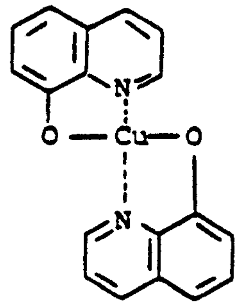

(VII)

eine besonders hohe fungizide Wirksamkeit aufweisen.

Überraschenderweise ist die fungizide Wirkung der erfindungsgemäßen Wirkstoffkombinatonen wesentlich höher als die Wirkung der Einzelkomponenten und gegebenenfalls auch als die Summe der Einzelkomponenten (synergistischer Effekt). Die Beifügung von Wirkstoffen aus den oben angegebenen Gruppen (A), (B), (C), (D), (E) und (F) zu den 1,2,4-Triazol-Derivaten der Formel stellt eine Bereicherung der Technik dar.

Die für die erfindungsgemäße Kombination zu verwendenden 1,2,4-Triazol-Derivate von Phenoxyetherketonen und Phenoxyetheralkanolen sind durch die allgemeinen Formel definiert. In dieser Formel steht $R^1$ für Phenyl, das gegebenenfalls vorzugsweise ein- bis dreifach durch Fluor, Chlor, Nitro, Trifluormethyl, Methyl, Methoxy und Phenyl substituiert sein kann. $R^2$ steht vorzugsweise für Wasserstoff, $R^3$ steht vorzugsweise für geradkettiges oder verzweigtes Alkyl mit 1 bis 4 Kohlenstoffatomen, für Phenyl und 4-Chlorphenyl, und Y hat die bevorzugten Bedeutungen CO oder CH(OH). Als typische Beispiele für besonders bevorzugte 1,2,4-Triazol-Derivate von Phenoxyetherketonen und Phenoxyetheralkanolen seien die folgenden Verbindungen der Formel I mit den jeweils angegebenen Substituentenbedeutungen genannt:

Ia: $R^1$ = 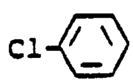 , $R^2$ = H, Y = CO, $R^3$ = $C(CH_3)_3$,

Ib: $R^1$ = 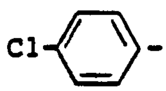 , $R^2$ = H, Y = CH(OH), $R^3$ = $C(CH_3)_3$

Ic: $R^1$ = 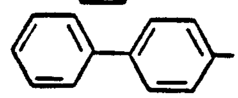 $R^2$ = H, Y = CH(OH), $R^3$ = $C(CH_3)_3$

Alle drei aufgeführten Verbindungen mit den Kurzbezeichnungen TRIADIMEFON (Ia), TRIADIMENOL (Ib) und BITERTANOL (Ic) sind allgemein bekannt (vgl. hierzu die Deutschen Patentschriften 2 201 063 und 2 324 010).

Die als Mischungskomponente gegebenenfalls zu verwendenden Chinoxalin-Derivate (Gruppe A) sind durch die Formeln IIa und IIb bezeichnet. Die Verbindungen mit den Kurzbezeichnungen CHINOMETHIONAT (IIa) und CHINOTHIONAT (IIb) sind allgemein bekannt (siehe oben die Angaben zum Stande der Technik). Bevorzugt sind Mischungen enthaltend erstens einen der beispielhaft genannten 1,2-4-Triazol-Derivate von Fhenoxyetherketonen und Phenoxyetheralkanolen (vgl. oben die Angaben zu den Verbindungen der Formel I) und CHINOMETHIONAT (Formel IIa) als Zweitkomponente.

Die weiterhin als Mischungskomponenten gegebenenfalls zu verwendenden Derivate von Imidazolen und Triazolen (Gruppe B) sind durch die Formeln IIIa bid IIIg bezeichnet. Die Verbindungen sind bekannt (siehe Angaben zum Stande der Technik). Bevorzugt sind Mischungen enthaltend erstens eines der beispielhaft gekannten 1,2,4-Triazol-Derivate von Phenoxyetherketonen und Phenoxyetheralkanolen und zweitens einen Wirkstoff der Formel IIIa (FUNGAFLOR) oder IIIc (1-Cyclohexyl-2-(1,2,4-triazol-1-yl)-3-hydroxy-4,4-dimethyl-penten-(1).

Der weiterhin als Mischungskomponente gegebenenfalls zu verwendende Phenylharnstoff (Gruppe C) ist durch die Formel IV bezeichnet. Die Verbindung mit der Kurzbezeichnung FENCYCURON ist bekannt (vgl. Angaben zum Stande der Technik). Bevorzugt sind Mischungen enthaltend erstens eines der beispielhaft genannten 1,2,4-Triazol-Derivate von Phenoxyetherketonen und Phenoxyetheralkanolen und zweitens dem Wirkstoff der Formel IV.

Die weiterhin als Mischungskomponenten gegebenenfalls zu verwendenden Bis-trifluormethylimino-fünfring-Verbindungen (Gruppe D) sind durch die Formeln Va und Vb bezeichnet. Die Verbindungen sind bekannt (vgl. Angaben zum Stande der Technik). Bevorzugt sind Mischungen enthaltend erstens eines der beispielhaft genannten 1,2,4-Triazol-Derivate von Phenoxyetherketonen und Phenoxyetheralkanolen und FLUBENZIMINE (Formel Va) als Zweitkomponente.

Das weiterhin als Mischungskomponenten gegebenenfalls zu verwendende 3-Azolyl-benzo-1,2,4-triazin-Derivat (Gruppe E) ist durch die Formel VI bezeichnet. Die Verbindung ist bekannt (vgl. Angaben zum Stande der Technik). Bevorzugt sind Mischungen enthaltend erstens eines der beispielhaft gekannten 1,2,4- Triazol-Derivate von Phenoxyetherketonen und Phenoxyetheralkanolen und zweitens dem Wirkstoff der Formel VI.

Das weiterhin als Mischungskomponente gegebenenfalls zu verwendende Kupfer-Komplexsalz (Gruppe F) ist durch die Formel VII bezeichnet. Die Verbindung ist bekannt (vgl. die Angaben zum Stande der Technik). Bevorzugt sind Mischungen enthaltend erstens eines der beispielhaft genannten 1,2,4-Triazol-Derivate von Phenoxyetherketonen und Phenoxyetheralkanolen und zweitens dem Wirkstoff der Formel VII.

Die Gewichtsverhältnisse der Wirkstoffgruppen in den Wirkstoffkombinationen können in relativ großen Bereichen schwanken. Im allgemeinen entfallen auf 1 Gew.-Teil an 1,2,4-Triazol-Derivat der Formel I 0,02 bis 500 Gew.-Teile Wirkstoff aus den Wirkstoffklassen (A) bis (F), vorzugsweise 0,2 bis 200 Gew.-Teile aus den letzteren, besonders bevorzugt 1 bis 50 Gew.-Teile.

Die erfindungsgemäßen Wirkstoffkombinationen weisen eine starke mikrobizide Wirkung auf und können zur Bekämpfung von unerwünschten Mikroorganismen praktisch eingesetzt werden. Die Wirkstoffe sind für den Gebrauch als Pflanzenschutzmittel geeignet.

Fungizide Mittel im Pflanzenschutz werden eingesetzt zur Bekämpfung von Plasmodiophoromycetes, Oomycetes, Chytridiomycetes, Zygomycetes, Ascomycetes, Basidiomycetes, Deuteromycetes.

Die gute Pflanzenverträglichkeit der Wirkstoffe in den zur Bekämpfung von Pflanzenkrankheiten notwendigen Konzentrationen erlaubt eine Behandlung von oberirdischen Pflanzenteilen, von Pflanz- und Saatgut, und des Bodens.

Die erfindungsgemäßen Wirkstoffkombinationen haben ein sehr breites Wirkungsspektrum und können angewandt werden gegen parasitäre Pilze, die oberirdische Pflanzenteile befallen oder die Pflanzen vom Boden her angreifen, sowie samenübertragbare Krankheitserreger. Besondere praktische Bedeutung haben solche Wirkstoffkombinationen als Saatgutbeizmittel gegen phytopathogene Pilze, die mit dem Saatgut übertragen werden oder im Boden vorkommen und von dort die Kulturpflanzen befallen. Dabei handelt es sich um Keimlingskrankheiten, Wurzelfäulen, Stengel-, Halm-, Blatt-, Blüten-, Frucht- und Samenkrankheiten, die insbesondere durch Tilletia-Urocystis-, Ustilago-, Septoria-, Typhula-, Rhynchosporium-, Helminthosporium- und Fusarium-Arten hervorgerufen werden. Durch die systemische Wirkung des einem Mischungspartners werden die Pflanzen auch oft längere Zeit nach der Beizung noch vor Krankheitserregern geschützt, die verschiedene Teile des Sprosses angreifen können, z. B. echte Mehltaupilze und Rostpilze. Die Wirkstoffkombinationen können daneben auch als Bodenbehandlungsmittel gegen phytopathogene Pilze ingesetzt werden und wirken gegen Wurzelfäulen und Tracheomykosen, die z. B. durch Krankheitserreger der Gattungen Pythium, Verticillium, Phialophora, Rhizoctonia, Fusarium und Thielaviopsis verursacht werden.

Die erfindungsgemäßen Wirkstoffkombinationen zeigen aber auch hervorragende Wirkung bei direkter Applikation auf die oberirdischen Pflanzenteile gegen Krankheitserreger auf verschiedenen Kulturpflanzen, wie echte Mehltaupilze (Erysiphe-, Uncinula-, Sphaerotheca-, Podosphaera-Arten, Leveillula taurica), Rostpilze, Venturia-Arten, Cercospora-Arten, Alternaria-Arten, Botrytis-Arten, Phytophthora-Arten, Peronospora-Arten, Pyricularia oryzae, Pellicularia sasakii.

Die Wirkstoff-Kombinationen können in die üblichen Formulierungen übergeführt werden, wie Lösungen, Emulsionen, Suspensionen, Pulver, Schäume, Pasten, Granulate, Aerosole, Wirkstoffimprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.a., sowie ULV-Kalt- und Warmnebel-Formulierungen.

Diese Formulierungen werden in bekannter Weise hergestellt, z. B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z. B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z. B. Erdölfraktionen, Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z. B. Aerosol-Treibgas, wie Halogenkohlenwasserstoffe sowie Butan, Propan, Stickstoff und Kohlendioxid; als feste Trägerstoffe kommen in Frage: z. B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z. B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z. B. nichtionogene und anionische Emulgatoren, wie Polyoxyethylen-Fettsäure-Ester, Polyoxyethylen-Fettalkohol-Ether, z. B. Alkylarylpolyglykol-ether, Alkylsulfonate, Alkylsulfate, Arylsulfonate sowie Eiweißhydrolysate; als Dispergiermittel kommen in Frage: z. B. Lignin-Sulfitablaugen und Methylcellulose.

Es können in den Formulierungen Haftmittel wie Carboxymethylcellulose, natürliche und synthetische pulverige, körnige und latexförmige Polymere verwendet werden, wie Gummiarabicum, Polyvinylalkohol, Polyvinylacetat.

Es können Farbstoffe wie anorganische Pigmente, z. B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zinn verwendet werden.

Die Formulierungen enthalten im allgemeinen zwischen 0,1 und 95 Gew.-% Wirkstoff, vorzugsweise zwischen 0,5 und 90 %.

Die erfindungsgemäßen Wirkstoff-Kombinationen können in den Formulierungen oder in den verschiedenen Anwendungsformen in Mischung mit anderen bekannten Wirkstoffen vorliegen, wie Fungiziden, Bakteriziden, Insektiziden, Akariziden, Nematiziden, Herbiziden, Schutzstoffen gegen Vogelfraß, Wuchsstoffen, Pflanzennährstoffen und Bodenstrukturverbesserungsmitten.

Die Wirkstoffe können als solche, in Form ihrer Formulierungen oder der daraus durch weiteres Verdünnen bereiteten Anwendungsformen, wie gebrauchsfertige Lösungen, Emulsionen, Suspensionen, Pulver, Pasten und Granulate angewendet werden. Die Anwendung geschieht in üblicher Weise, z. B. durch Gießen, Tauchen, Spritzen, Sprühen, Vernebeln, Verdampfen, Injizieren, Verschlämmen, Verstreichen, Stäuben, Streuen, Trockenbeizen, Feuchtbeizen, Naßbeizen, Schlämmbeizen oder Inkrustieren.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew.-%, vorzugsweise zwischen 0,5 und 0,001 %.

Bei der Saatgutbehandlung werden im allgemeinen Wirkstoffmengen von 0,001 bis 50 g je Kilogramm Saatgut, vorzugsweise 0,01 bis 10g, benötigt.

Bei Behandlung des Bodens sind Wirkstoffkonzentrationen von 0,00001 bis 0,1 Gew.-%, vorzugsweise von 0,0001 bis 0,02 %, am Wirkungsort erforderlich.

Zur Erläuterung dienen die nachfolgenden Anwendungsbeispiele. Die beispielhaft in erfindungsgemäßen Wirkstoffkombinationen zu verwendenden Wirkstoffe sind in der nachfolgenden Aufstellung aufgelistet:

| Wirkstoff Nr. | Formel | Kurzbezeichnung ("Common name") | Literatur |
|---|---|---|---|
| 1 | Ia | TRIADIMEFON | DE-PS 22 01 063<br>U-PS-3 912 752 |
| 2 | Ib | TRIADIMENOL | DE-PS 23 24 010<br>U-PS-3 952 002 |
| 3 | Ic | BITERTANOL | wie bei Verbindung 2 |
| 4 | IIa | CHINOMETHIONAT | R. Wegler (loc. cit.) Bd. 2, S. 128 |
| 5 | IIb | CHINOTHIONAT | R. Wegler (loc. cit.) Bd. 2, S. 129 |
| 6 | IIIa | FUNGAFLOR | DE-OS 20 63 857<br>U-PS-3 658 813 |
| 7 | IIIb | FENAPRONIL | DE-OS 26 04 047<br>FR-PS 23 00 081 |
| 8 | IIIc | | DE-OS 29 06 061 |
| 9 | IIId | DICLOBUTRAZOL | DE-OS 27 37 489<br>FR-PS 23 62 133 |
| 10 | IIIe | | wie bei Verbindung 11 |
| 11 | IIIf | PROPICONAZOL (vorgeschlagen) | DE-PS 25 51 560<br>GB-PS 1 522 657 |
| 12 | IIIg | ETACONAZOLE (vorgeschlagen) | wie bei Verbindung 13 |
| 13 | IIIh | TRIAZBUTIL | R. Wegler (loc. cit.), Bd. 4, Seite 210<br>US-PS 3 647 810 |
| 14 | IV | PENCYCURON | DE-PS 27 32 257<br>US-PS 4 127 673 |
| 15 | Va | FLUBENZIMINE | DE-PS 20 62 348<br>U-PS 3 895 020 |
| 16 | Vb | | DE-OS 20 62 346<br>US-PS 3 787 435<br>US-PS 3 934 019 |
| 17 | VI | | DE-OS 28 02 488<br>U-PS 4 239 760 |
| 18 | VII | OXIN-KUPFER | R. Wegler, loc. cit, S. 112 |

**Beispiel A**

Erysiphe-Test (Gerste)/protektiv

Lösungsmittel: 100 Gew.-Teile Dimethylformamid

Emulgator: 0,25 Gew.-Teile Alkylarylpolyglykolether

Zur Herstellung einer zweckmäßigen Wirkstoffzubereitung vermischt man 1 Gew.-Teil Wirkstoff mit den angegebenen Mengen Lösungsmittel und Emulgator und verdünnt das Konzentrat mit Wasser auf die gewünschte Konzentration.

Zur Prüfung auf protektive Wirksamkeit besprüht man junge Pflanzen mit der Wirkstoffzubereitung

taufeucht. Nach Antrocknen des Spritzbelages werden die Pflanzen mit Sporen von Erysiphe graminis f.sp. hordei bestäubt.

Die Pflanzen werden in einem Gewächshaus bei einer Temperatur von ca. 20°C und einer relativen Luftfeuchtigkeit von ca. 80 % aufgestellt, um die Entwicklung von Mehltaupusteln zu begünstigen.

7 Tage nach der Inokulation erfolgt die Auswertung.

**Tabelle A**

Erysiphe-Test (Gerste)/protektiv

| Wirkstoff | Wirkstoffkonzentration in der Spritzbrühe in Gew.-% | Krankheitsbefall in % der unbehandelten Kontrolle |
|---|---|---|
| 1 (TRIADIMEFON) | 0,00025 | 25,0 |
| (bekannt) | 0,0001 | 66,3 |
| 4 (CHINOMETHIONAT) | 0,00025 | 100 |
| (bekannt) | 0,0001 | 100 |
| Mischung aus 1 und 4 | 0,00025 | 12,5 |
| (Mischungsverhältnis 1 : 1) | +0,00025 | |
| Mischung aus 1 und 4 | 0,0001 | 25,0 |
| (Mischungsverhältnis 1 : 1) | +0,0001 | |

**Beispiel B**

Sphaerotheca-Test (Gurke)/protektiv

Zur Prüfung auf protektive Wirksamkeit bespritzt man junge Pflanzen mit einer handelsüblichen Formulierung bis zur Tropfnässe. Nach Antrocknen des Spritzbelages werden die Pflanzen mit Konidien des Pilzes Sphaerotheca fuliginea bestäubt.

Die Pflanzen werden anschließend bei 23 bis 24°C und bei einer relativen Luftfeuchtigkeit von ca. 75 % im Gewächshaus aufgestellt.

10 Tage nach der Inokulation erfolgt die Auswertung.

**Tabelle B**

Sphaerotheca-Test (Gurke)/protektiv

| Wirkstoff | Wirkstoffkonzentration | Befall in % |
|---|---|---|
| 1 (TRIADIMEFON) (bekannt) | 0,00006 | % 50 |
| 4 (CHINOMETHIONAT) (bekannt) | 0,00006 % | 96 |
| Mischung aus 1 und 4 | 0,00006 % | 38 |
| (Mischungsverhältnis 1 : 1) | +0,00006 % | |

**Beispiel C**

Drechslera graminea-Test (Gerste)/Saatgutbehandlung (syn. Helminthosporium gramineum).

Die Anwendung der Wirkstoffe erfolgt als Trockenbeizmittel. Sie werden zubereitet durch Abstrecken des jeweiligen Wirkstoffes mit Gesteinsmehl zu einer feinpulvrigen Mischung, die eine gleichmäßige Verteilung auf der Saatgutoberfläche gewährleistet.

Zur Beizung schüttelt man das infizierte Saatgut 3 Minuten lang mit dem Beizmittel in einer verschlossenen Glasflasche.

Das Saatgut setzt man in gesiebter, feuchter Standarderde eingebettet, in verschlossenen Petrischalen im

Kühlschrank 10 Tage lang einer Temperatur von 4°C aus. Dabei wird die Keimung der Gerste und gegebenenfalls auch der Pilzsporen eingeleitet. Anschließend sät man die vorgekeimte Gerste mit 2 X 50 Korn 3 cm tief in eine Standarderde und kultiviert sie im Gewächshaus bei einer Temperatur von ca. 18°C in Saatkästen, die täglich 15 Stunden dem Licht ausgesetzt werden.

Ca. 3 Wochen nach der Aussaat erfolgt die Auswertung der Pflanzen auf Symptome der Streifenkrankheit.

**Tabelle C**

Drechslera graminea-Test (Gerste)/Saatgutbehandlung (syn. Helminthosporium gramineum)

| Wirkstoff | Wirkstoffaufwandmenge in mg/kg Saatgut | kranke Pflanzen in % der insgesamt aufgelaufenen Pflanzen |
|---|---|---|
| ungebeizt | - | 28,8 |
| 2 (TRIADIMENOL) (bekannt) | 200 | 12,3 |
| 17 (Verbindung der Formel (VI)) (bekannt) | 10 | 4,9 |
| 6 (FUNGAFLOR) (bekannt) | 10 | 8,3 |
| Mischung aus 2 und 17 (Mischungsverhältnis 1 : 0,05) | 200 +10 | 0,0 |
| Mischung aus 2 und 6 (Mischungsverhältnis 1 : 005) | 200 +10 | 0,0 |

**Beispiel D**

Leptosphaeria nodorum-Test (Weizen)/protektiv

Lösungsmittel: 100 Gewichtsteile Dimethylformamid

Emulgator: 0,25 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit besprüht man junge Pflanzen mit der Wirkstoffzubereitung taufeucht. Nach Antrocknen des Spritzbelages werden die Pflanzen mit einer Konidiensuspension von Leptosphaeria nodorum besprüht. Die Pflanzen verbleiben 48 Stunden bei 20°C und 100 % relativer Luftfeuchtigkeit in einer Inkubationskabine.

Die Pflanzen werden in einem Gewächshaus bei einer Temperatur von ca. 15°C und einer relativen Luftfeuchtigkeit von ca. 80 % aufgestellt.

10 Tage nach der Inokulation erfolgt die Auswertung.

**Tabelle D**

Leptosphaeria nodorum-Test (Weizen)/protektiv

| Wirkstoff | Wirkstoffkonzentration in der Spritzbrühe in Gew.-% | Krankheitsbefall in % der unbehandelten Kontrolle |
|---|---|---|
| 1 (TRIADIMEFON) (bekannt) | 0,01 | 100 |
| 15 (FLUBENZIMINE) (bekannt) | 0,01 | 50 |
| Mischung aus 1 und 15 (Mischungsverhältnis 1 : 1) | 0,01 +0,01 | 25,0 |

**Beispiel E**

Pyrenophora teres-Test (Gerste)/protektiv/

Lösungsmittel: 100 Gewichtsteile Dimethylformamid

Emulgator: 0,25 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit besprüht man junge Pflanzen mit der Wirkstoffzubereitung taufeucht. Nach Abtrocknen des Spritzbelages werden die Pflanzen mit einer Konidiensuspension von Pyrenophora teres besprüht. Die Pflanzen verbleiben 48 Stunden bei 20°C und 100 % relativer Luftfeuchtigkeit in einer Inkubationskabine.

Die Pflanzen werden in einem Gewächshaus bei einer Temperatur von ca. 20°C und einer relativen Luftfeuchtigkeit von ca. 80 % aufgestellt.

7 Tage nach der Inokulation erfolgt die Auswertung.

**Tabelle E**

Pyrenophora teres-Test (Gerste)/protektiv

| Wirkstoff | Wirkstoffkonzentration in der Spritzbrühe in Gew.-% | Krankheitsbefall in % der unbehandelten Kontrolle |
|---|---|---|
| 1 (TRIADIMEFON) (bekannt) | 0,005 | 100 |
| 8 (Verbindung der Formel (IIIc)) (bekannt) | 0,01 | 100 |
| Mischung aus 1 und 8 (Mischungsverhältnis 1 : 2) | 0,005 +0,01 | 21,3 |

**Patentansprüche**

1. Fungizides Mittel, gekennzeichnet durch einen Gehalt an einer Wirkstoffkombination aus 1,2,4-Triazol-Derivaten von Phenoxyetherketonen und Phenoxyetheralkanolen der Formel

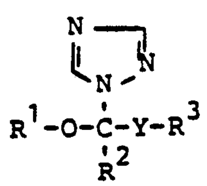

(I)

in welcher

$R^1$ für Phenyl steht, das gegebenenfalls durch Halogen, Nitro, Trifluormethyl, Alkyl mit bis zu 6 Kohlenstoffatomen, Alkoxy mit bis zu 4 Kohlenstoffatomen, Phenyl und 4-Chlorphenyl substituiert sein kann,

$R^2$ für Wasserstoff, Alkyl mit bis zu 4 Kohlenstoffatomen oder Phenyl steht,

$R^3$ für Alkyl mit bis zu 6 Kohlenstoffatomen, Cycloalkyl mit 5 bis 6 Kohlenstoffatomen, Phenyl oder 4-Chlorphenyl steht, und

Y für die CO-Gruppe, die Gruppe

C
||
N - OH

oder $C(OH)_2$ oder CH(OH) steht, und
(A) Chinoxalin-Derivat der Formel

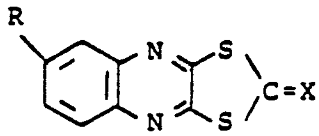

(IIa): R = $CH_3$, X = O,
(IIb): R = H, X = S,

und/oder
(B) Derivaten von Imidazolen und Triazolen der Formel

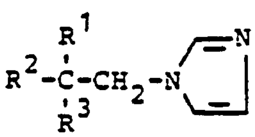

(IIIa): $R^1$ = H, $R^2$ = $CH_2$=CH-$CH_2$-O
$R^3$ = Cl- 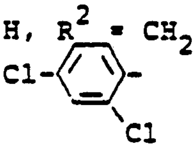 -

(IIIb): $R^1$ = CN, $R^2$ = 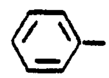
$R^3$ = $C_4H_9$

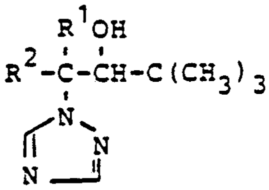

(IIIc): $R^1$ und $R^2$ zusammengenommen
= 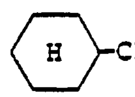 -CH=

(III d): $R^1$ = H, $R^2$ = 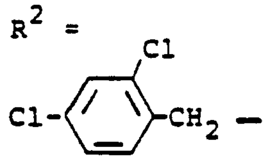

(III e): $R^1$ = H, $R^2$ = Cl- 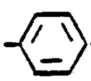 -$CH_2$-

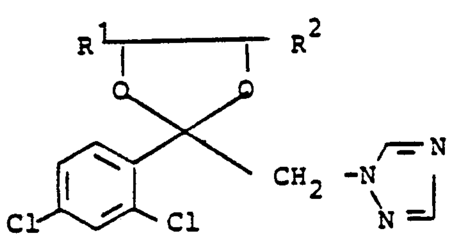

(III f): $R^1$ = $C_3H_7$, $R^2$ = H
($HNO_3$-Salz)

(III g): $R^1$ = H, $R^2$ = $C_2H_5$

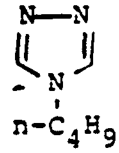

(IIIh)

und/oder

(C) einem Phenylharnstoff der Formel

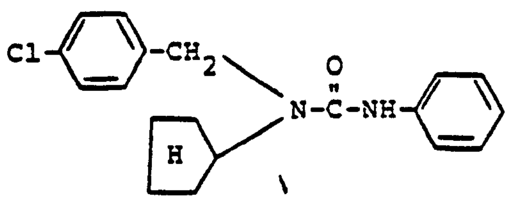

(IV)

und/oder

(D) Bis-trifluormethylimino-fünfring-Verbindungen der Formel

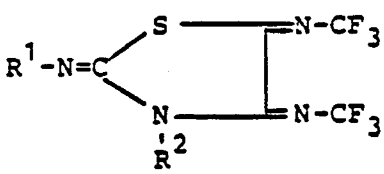

(Va): $R^1 = R^2 =$ 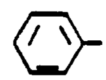 und

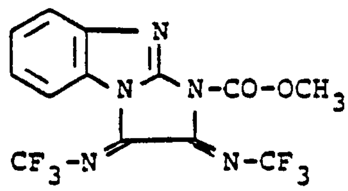

($V^b$)

und/oder

(E) einem 3-Azolyl-benzo-1,2,4-triazin-Derivat der Formel

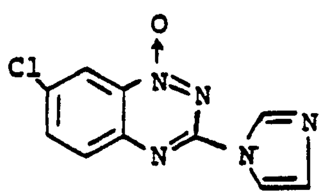

(VI)

und/oder

(F) einem Kupfer-Komplexsalz der Formel

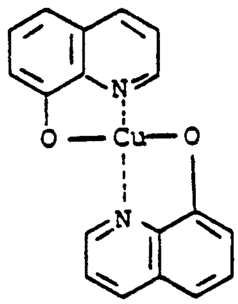

(VII)

2. Fungizides Mittel gemäß Anspruch 1, dadurch gekennzeichnet, daß in der Wirkstoffkombination das Gewichtsverhältnis von 1,2,4-Triazol-Derivaten von Phenoxyetherketonen und Phenoxyetheralkanolen zu den Wirkstoffen aus den Wirkstoffklassen (A) bis (F) zwischen 1 : 0,02 und 1 : 500 liegt.

3. Fungizides Mittel gemäß Ansprüchen 1 und 2, dadurch gekennzeichnet, daß das Gewichtsverhältnis zwischen 1 : 0,2 und 1 : 200 liegt.

4. Fungizides Mittel gemäß Ansprüchen 1 und 2, dadurch gekennzeichnet, daß das Gewichtsverhältnis zwischen 1 : 1 und 1 : 50 liegt.

5. Verfahren zur Bekämpfung von Pilzen, dadurch gekennzeichnet, daß man eine Wirkstoffkombination gemäß Anspruch 1 auf Pilze oder deren Lebensraum einwirken läßt.

6. Verwendung von Wirkstoffkombinationen gemäß Anspruch 1 zur Bekämpfung von Pilzen.

7. Verfahren zur Herstellung von fungiziden Mitteln, dadurch gekennzeichnet, daß man eine Wirkstoffkombination gemäß Anspruch 1 mit Streckmitteln und/oder oberflächenaktiven Mitteln vermischt.

**Revendications**

1. Produit fongicide caractérisé en ce qu'il contient une combinaison de substances actives consistant en dérivés du 1,2,4-triazole et de phénoxy-éther-cétones ou de phénoxy-éther-alcanols de formule

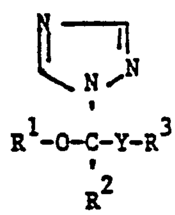

(I)

dans laquelle

$R^1$ représente un groupe phényle éventuellement substitué par des halogènes des groupes nitro, trifluorométhyle alkyle contenant jusqu'à 6 atomes de carbone, alcoxy contenant jusqu'à 4 atomes de carbone, phényle et 4-chlorophényle,

$R^2$ représente l'hydrogène, un groupe alkyle contenant jusqu'à 4 atomes de carbone ou phényle,

$R^3$ représente un groupe alkyle contenant jusqu'à 6 atomes de carbone, cycloalkyle contenant 5 à 6 atomes de carbone, phényle ou 4-chlorophényle, et

Y représente le groupe CO, le groupe

C
‖
N - OH

ou $C(OH)_2$ ou CH(OH), et

(A) un dérivé de quinoxaline de formule

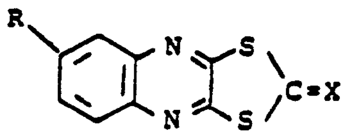

(IIa) : R = $CH_3$, X = O
(IIb) : R = H, X = S

et/ou

(B) des dérivés d'imidazoles et de triazoles de formule

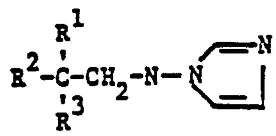

(IIIa) : $R^1$ = H, $R^2$ = 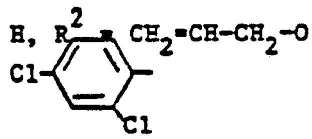
$R^3$ =

(IIIb) : $R^1$ = CN, $R^2$ = 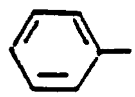
$R^3$ = $C_4H_9$

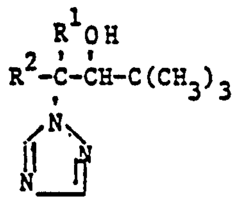

(IIIc) : $R^1$ et $R^2$ pris ensemble
= 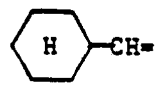

(IIId) : $R^1$ = H et $R^2$
= 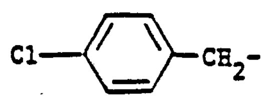

(IIIe) : $R^1$ = H et $R^2$
= 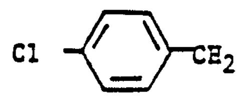

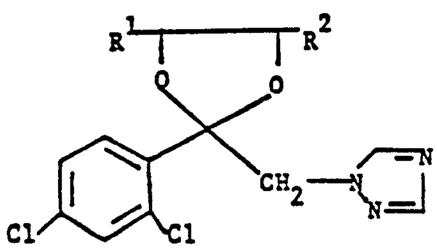

(IIIf) : $R^1$ = $C_3H_7$, $R^2$ = H
(sel de $HNO_3$)

(IIIg) : $R^1$ = H, $R^2$ = $C_2H_5$

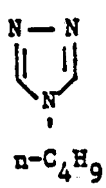

(IIIh)

et/ou

(C) une phénylurée de formule

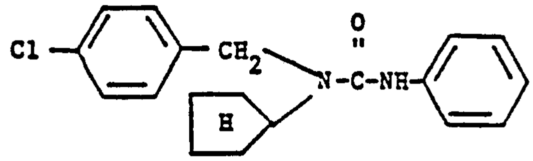

(IV)

et/ou

(D) des composés à cycle pentagonal et à substituant bis tri-fluorméthylimino de formules

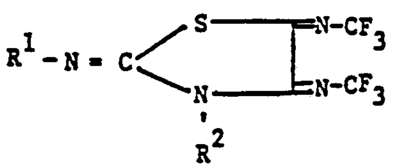 (Va) : $R^1 = R^2 =$ 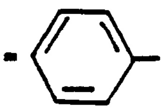 et 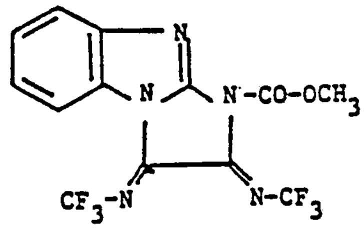 (Vb)

et/ou

(E) un dérivé de 3-axolyl-benzo-1,2,4-triazine de formule

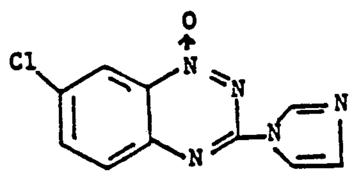

(VI)

et/ou

(F) un sel complexe de cuivre de formule

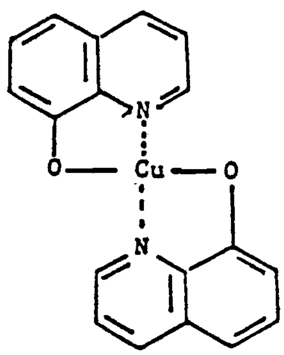

(VII)

2. Produit fongicide selon la revendication 1, caractérisé en ce que, dans la combinaison de substances actives, les proportions relatives en poids entre les dérivés du 1,2,4-triazole et de phénoxyéther-cétones ou de phénoxyéther-alcanols et les substances actives des classes (A) à (F) vont de 1 : 0,02 à 1 : 500.

3. Produit fongicide selon les revendications 1 et 2, caractérisé en ce que les proportions relatives vont de 1 : 0,2 à 1 :200.

4. Produit fongicide selon les revendications 1 et 2, caractérisé en ce que les proportions relatives vont de 1 : 1 à 1 : 50.

5. Procédé pour combattre des mycètes caractérisé en ce que l'on fait agir sur les mycètes ou leur habitat une combinaison de substances actives selon la revendication 1.

6. Utilisation de combinaisons de substances actives selon la revendication 1 pour la lutte contre les mycètes.

7. Procédé de préparation de produits fongicides, caractérisé en ce que l'on mélange une combinaison de substances actives selon la revendication 1 avec des diluants et/ou des agents tensio-actifs.

**Claims**

1. Fungicidal agent characterised in that it contains an active compound combination comprising 1,2,4-triazole derivatives of phenoxyether-ketones and phenoxyether-alkanols of the formula

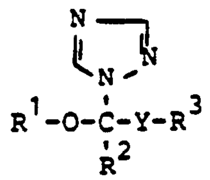

(I)

in which

$R^1$ represents phenyl which can be optionally substituted by halogen, nitro, trifluoromethyl, alkyl having up to 6 carbon atoms, alkoxy having up to 4 carbon atoms, phenyl and 4-chlorophenyl,

$R^2$ represents hydrogen, alkyl having up to 4 carbon atoms or phenyl,

$R^3$ represents alkyl having up to 6 carbon atoms, cycloalkyl having 5 to 6 carbon atoms, phenyl or 4-chlorophenyl and

Y represents the CO group, the group

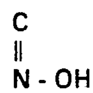

or $C(OH)_2$ or CH(OH), and

(A) quinoxaline derivative of the formula

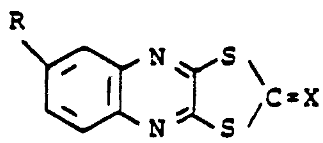

(IIa): R = $CH_3$, X = O,
(IIb): R = H, X = S,

and/or

(B) derivates of imidazoles and triazoles of the formula

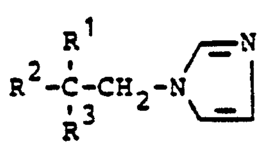

(IIIa): $R^1$ = H, $R^2$ = $CH_2=CH-CH_2-O$
$R^3$ = 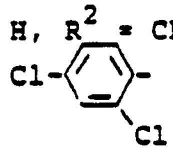

(IIIb): $R^1$ = CN, $R^2$ = 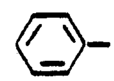
$R^3$ = $C_4H_9$

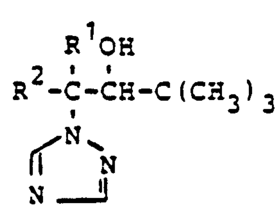

(IIIc): $R^1$ und $R^2$ zusammengenommen
= 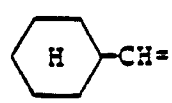

(III d): $R^1$ = H, $R^2$ = 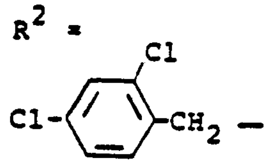

(III e): $R^1$ = H, $R^2$ = 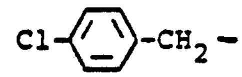

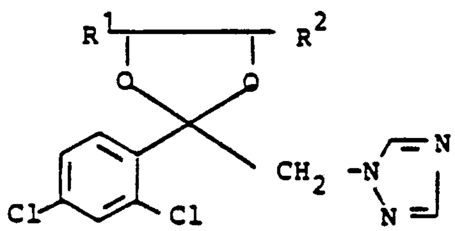

(III f): $R^1$ = $C_3H_7$, $R^2$ = H
($HNO_3$-Salz)

(III g): $R^1$ = H, $R^2$ = $C_2H_5$

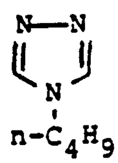

(III h)

and/or
(C) a phenylurea of the formula

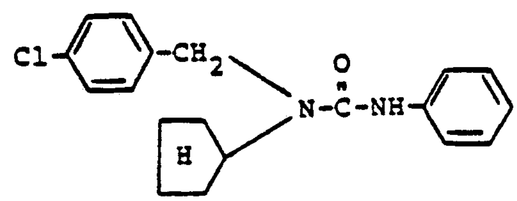

(IV)

and/or
(D) bis-triflourmethylimino five-membered ring compounds of the formula

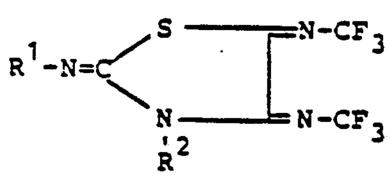

(Va): $R^1$ = $R^2$ = 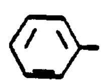 and 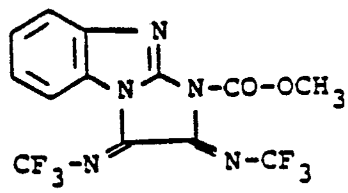

(Vb)

and/or
(E) a 3-azolyl-benzo-1,2,4-triazine derivative of the formula

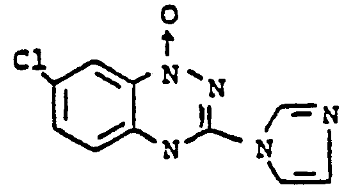

(VI)

and/or
(F) a copper complex salt of the formula

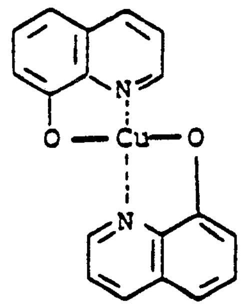

(VII)

2. Fungicidal agent according to Claim 1, characterised in that, in the active compound combination, the weight ratio of 1,2,4-triazole derivatives of phenoxyether-ketones and phenoxyether-alkanols to the active compounds from the active compound classes (A) to (F) is between 10 : 02 and 1 : 500.

3. Fungicidal agent according to Claims 1 and 2, characterised in that the weight ratio is between 1 : 0,2 and 1: 200.

4. Fungicidal agent according to Claims 1 and 2, characterised in that the weight ratio is between 1 : 1 and 1 : 50.

5. Process for combating fungi, characterised in that an active compound combination according to Claim 1 is allowed to act on fungi or their habitat.

6. Use, for combating fungi, of active compound combinations according to Claim 1.

7. Process for the preparation of fungicidal agents, characterised in that an active compound combination according to Claim 1 is mixed with extenders and/or surface-active agents.